(19) Europäisches Patentamt
European Patent Office
Office européen des brevets

(11) **EP 3 464 027 B1**

## (12) EUROPÄISCHE PATENTSCHRIFT

(45) Veröffentlichungstag und Bekanntmachung des Hinweises auf die Patenterteilung:
**30.06.2021 Patentblatt 2021/26**

(21) Anmeldenummer: **17725265.7**

(22) Anmeldetag: **24.05.2017**

(51) Int Cl.:
**B62D 15/02** (2006.01)

(86) Internationale Anmeldenummer:
**PCT/EP2017/062522**

(87) Internationale Veröffentlichungsnummer:
**WO 2017/207378 (07.12.2017 Gazette 2017/49)**

(54) **VERFAHREN ZUM MANÖVRIEREN EINES KRAFTFAHRZEUGS IN EINE PARKLÜCKE MIT BESTIMMUNG EINER EINPARKTRAJEKTORIE, FAHRERASSISTENZSYSTEM SOWIE KRAFTFAHRZEUG**

METHOD FOR MANOEUVRING A MOTOR VEHICLE INTO A PARKING SPACE WITH THE DETERMINING OF A PARKING TRAJECTORY, DRIVER ASSISTANCE SYSTEM AND MOTOR VEHICLE

PROCÉDÉ DE MANŒUVRE D'UN VÉHICULE AUTOMOBILE DANS UN EMPLACEMENT DE STATIONNEMENT PAR DÉTERMINATION D'UNE TRAJECTOIRE DE PRISE DE STATIONNEMENT, SYSTÈME D'AIDE À LA CONDUITE ET VÉHICULE AUTOMOBILE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **30.05.2016 DE 102016109852**

(43) Veröffentlichungstag der Anmeldung:
**10.04.2019 Patentblatt 2019/15**

(73) Patentinhaber: **Valeo Schalter und Sensoren GmbH**
**74321 Bietigheim-Bissingen (DE)**

(72) Erfinder:
• **BENSEMANN, Rolf**
**74321 Bietigheim-Bissingen (DE)**

• **HEIMBERGER, Markus**
**74321 Bietigheim-Bissingen (DE)**

(74) Vertreter: **Pothmann, Karsten et al**
**Valeo Schalter und Sensoren GmbH**
**CDA-IP**
**Laiernstraße 12**
**74321 Bietigheim-Bissingen (DE)**

(56) Entgegenhaltungen:
WO-A1-2014/167255    DE-A1-102008 058 652
DE-A1-102009 027 289    DE-A1-102010 006 738
US-A1- 2016 075 329

**Beschreibung**

Die vorliegende Erfindung betrifft ein Verfahren zum Manövrieren eines Kraftfahrzeugs in eine Parklücke, bei welchem von einem Startpunkt zu einem Zielpunkt in der Parklücke eine Einparktrajektorie bestimmt wird, wobei die Einparktrajektorie aus Kreisbögen, Linien und Klothoiden zusammengesetzt ist, und das Kraftfahrzeug entlang der bestimmten Einparktrajektorie in die Parklücke manövriert wird. Darüber hinaus betrifft die vorliegende Erfindung ein Fahrerassistenzsystem für ein Kraftfahrzeug. Schließlich betrifft die vorliegende Erfindung ein Kraftfahrzeug.

Das Interesse richtet sich vorliegend insbesondere auf Fahrerassistenzsysteme, welche einen Fahrer beim Einparken des Kraftfahrzeugs in eine Parklücke unterstützen. Hierzu sind aus dem Stand der Technik Fahrerassistenzsysteme bekannt, welche die Parklücke entsprechend vermessen können und anschließend eine Einparktrajektorie, entlang welcher das Kraftfahrzeug in die Parklücke bewegt wird, bestimmen. Bei derartigen automatischen Einparkhilfen wird vor Beginn eines Einparkmanövers oder vor Beginn eines neuen Zugs die Einparktrajektorie geplant, welche das Kraftfahrzeug dann abfahren soll. Dabei ist die Einparktrajektorie einerseits so zu planen, dass diese hindernisfrei ist und andererseits ist diese so zu planen, dass diese möglichst genau vom Kraftfahrzeug abgefahren werden kann. Dabei kann die Berechnung der Einparktrajektorie sehr aufwendig sein, je nachdem, wie komplex das angenommene Fahrzeugmodell ist, und wie viele Objekte bzw. Hindernisse bei der Planung der Einparktrajektorie berücksichtigt werden müssen.

Bei heutigen Fahrerassistenzsystemen bzw. Einparkhilfen gibt es zwei verschiedene Ansätze, mit denen die Komplexität reduziert werden soll. Ein erster Ansatz besteht darin, bei der Bestimmung der Einparktrajektorie möglichst einfache geometrische Segmente bzw. Abschnitte zu verwenden. Beispielsweise kann die Einparktrajektorie nur aus Linien und Kreisbögen zusammengesetzt werden. Damit kann auf relativ einfache Weise ein hindernisfreier Pfad geplant werden. Der Nachteil ist, dass aufgrund dieser einfachen Beschreibung der Einparktrajektorie das Kraftfahrzeug einer solchen Einparktrajektorie nur sehr ungenau folgen kann. Beispielsweise ist es hierbei erforderlich, dass bei einem Übergang von einem Kreisbogen zu einer Linie der Lenkwinkel schlagartig verändert werden muss. Dies ist aber nur möglich, wenn das Kraftfahrzeug bei diesem Übergang anhält und den Lenkwinkel durch eine Lenkung im Stand verändert. In der Praxis fährt das Kraftfahrzeug aber über die Grenzen der einzelnen Abschnitte und der Lenkwinkel des neuen Abschnitts kann nicht eingehalten werden. Somit kommt es zwangsweise zu größeren Abweichungen von der Einparktrajektorie. Ein zweiter Ansatz sieht die Planung der Einparktrajektorie mit komplexeren geometrischen Abschnitten vor. Hier können zusätzlich zu Kreisbögen und Linien auch Klothoiden oder Polynomfunktionen verwendet werden, um die Einparktrajektorie zu beschreiben. Um die Komplexität bei der Planung der Einparktrajektorie zu verringern, ist es üblicherweise erforderlich, dass die Beschreibung der Hindernisse vereinfacht wird oder auch die Anzahl der zu berücksichtigenden Hindernisse reduziert wird.

Hierzu beschreibt die DE 10 2005 062 084 A1 ein Verfahren zum Lenken eines Fahrzeugs in eine Parklücke. Dabei wird eine Soll-Einparkbahn ermittelt, entlang welcher das Kraftfahrzeug rückwärts in eine Parklücke eingeparkt werden kann. Zur Berechnung der Soll-Einparkbahn können Referenzbahnen bestimmt werden, welche sich jeweils aus mehreren Bahnabschnitten zusammensetzen, wobei ausgehend von der Parklücke zumindest zwei Kreisbögen mit entgegengesetzter Krümmung und eine Gerade vorgesehen sind. Ferner kann es vorgesehen sein, dass an einem Umlenkpunkt ein Doppelklothoidenbogen zwischen den beiden Kreisbögen eingefügt wird und dass ein weiterer Klothoidenbogen vorzugsweise zwischen dem zweiten Kreisbogen und der Gerade eingefügt wird.

Des Weiteren beschreibt die EP 2 493 746 B1 ein Verfahren zur Unterstützung eines Fahrers beim Einparken in eine Längsparklücke. Hierbei kann eine Einparktrajektorie berechnet werden, welche sich im Allgemeinen aus Geradenstücken, Kreisbögen und Klothoiden zusammensetzt. Dabei können zum Beispiel Geraden und Kreisbögen jeweils durch eine Klothoide verbunden sein. Es auch vorgesehen sein, dass Kreisbögen mit unterschiedlichen Radien durch eine Klothoide verbunden werden.

DE 10 2009 027289 A1 ist als nächstliegender Stand der Technik zu sehen und beschreibt ein Verfahren zur Einparkunterstützung eines Fahrzeugs. Zunächst werden Umgebungsdaten des Fahrzeugs erfasst. In einem weiteren Schritt wird basierend auf den Umgebungsdaten beurteilt, ob das Fahrzeug ohne Zwischenhalt in die Parklücke einparken kann. In dem Fall, dass beurteilt wird, dass das Fahrzeug ohne Zwischenhalt in die Parklücke einparken kann, wird eine erste Bahnkurve zur Bewegung des Fahrzeugs ohne Zwischenhalt in die Parklücke ermittelt. Im umgekehrten Fall, dass beurteilt wurde, dass das Fahrzeug nicht ohne Zwischenhalt in die Parklücke einparken kann, wird eine Bahnkurve zur Bewegung des Fahrzeugs mit mindestens einem Zwischenhalt in die Parklücke ermittelt.

Es ist Aufgabe der vorliegenden Erfindung, eine Lösung aufzuzeigen, wie eine Einparktrajektorie der eingangs genannten Art auf einfache Weise so bestimmt werden kann, dass das Kraftfahrzeug präzise entlang dieser manövriert werden kann.

Diese Aufgabe wird erfindungsgemäß durch ein Verfahren, durch ein Fahrerassistenzsystem sowie durch ein Kraftfahrzeug mit den Merkmalen gemäß den jeweiligen unabhängigen Ansprüchen gelöst. Vorteilhafte Weiterbildungen der vorliegenden Erfindung sind Gegenstand der abhängigen Ansprüche.

Bei einer Ausführungsform eines Verfahrens zum Manövrieren eines Kraftfahrzeugs in eine Parklücke wird eine Einparktrajektorie von einem Startpunkt zu einem Zielpunkt in der Parklücke bestimmt, wobei die Einparktrajektorie bevorzugt aus Kreisbögen, Linien und Klothoiden zusammengesetzt ist. Ferner wird das Kraftfahrzeug bevorzugt entlang der bestimmten Einparktrajektorie in die Parklücke manövriert. Dabei wird insbesondere eine Hilfstrajektorie mit mehreren Abschnitten von dem Startpunkt zu dem Zielpunkt bestimmt, wobei die Hilfstrajektorie als die Abschnitte Kreisbögen und Linien aufweist. Für benachbarte Abschnitte wird bevorzugt ein jeweiliger Übergangsbereich definiert und für die jeweiligen Übergangsbereiche wird eine Klothoide bestimmt. Die Einparktrajektorie wird insbesondere aus der Hilfstrajektorie, bei welcher die jeweiligen Übergangsbereiche durch die Klothoiden ersetzt sind, bestimmt, wobei die Abschnitte der Hilfstrajektorie derart bestimmt werden, dass die Kreisbögen und die Linien abwechselnd zueinander angeordnet sind.

Ein erfindungsgemäßes Verfahren dient zum Manövrieren eines Kraftfahrzeugs in eine Parklücke. Dabei wird eine Einparktrajektorie von einem Startpunkt zu einem Zielpunkt in der Parklücke bestimmt, wobei die Einparktrajektorie aus Kreisbögen, Linien und Klothoiden zusammengesetzt ist. Zudem wird das Kraftfahrzeug entlang der vorbestimmten Einparktrajektorie manövriert. Ferner wird eine Hilfstrajektorie mit mehreren Abschnitten von dem Startpunkt zu dem Zielpunkt bestimmt, wobei die Hilfstrajektorie als die Abschnitte Kreisbögen und Linien aufweist. Für benachbarte Abschnitte wird ein jeweiliger Übergangsbereich definiert und für die jeweiligen Übergangsbereiche wird eine Klothoide bestimmt, wobei die Einparktrajektorie aus der Hilfstrajektorie, bei welcher die jeweiligen Übergangsbereiche durch die Klothoiden ersetzt sind, bestimmt wird.

Mit Hilfe des Verfahrens soll ein Fahrer des Kraftfahrzeugs beim Einparken des Kraftfahrzeugs in die Parklücke unterstützt werden. Das Verfahren kann mit einem entsprechenden Fahrerassistenzsystem des Kraftfahrzeugs durchgeführt werden. Dabei kann zunächst die Parklücke mit Hilfe des Fahrerassistenzsystems erkannt und vermessen werden. Zu diesem Zweck kann das Fahrerassistenzsystem entsprechende Abstandssensoren, beispielsweise Ultraschallsensoren, aufweisen, mit denen die Parklücke bzw. Objekte, welche die Parklücke begrenzen, erkannt werden können. Anhand der Abmessungen der Parklücke und der äußeren Abmessungen des Kraftfahrzeugs kann dann die Einparktrajektorie von dem Startpunkt zu dem Zielpunkt in der Parklücke bestimmt werden. Nach dem Bestimmen der Einparktrajektorie kann dann das Kraftfahrzeug in die Parklücke manövriert werden. Dabei kann es beispielsweise vorgesehen sein, dass entsprechende Fahrhinweise an den Fahrer des Kraftfahrzeugs ausgegeben werden, wie er das Kraftfahrzeug entlang der Einparktrajektorie in die Parklücke bewegen soll. Bevorzugt ist es aber vorgesehen, dass das Kraftfahrzeug mit Hilfe des Fahrerassistenzsystems zumindest semi-autonom in die Parklücke manövriert wird. Dabei kann es vorgesehen sein, dass das Kraftfahrzeug semi-autonom in die Parklücke manövriert wird. In diesem Fall übernimmt das Fahrerassistenzsystem einen Eingriff in die Lenkung des Kraftfahrzeugs, um das Kraftfahrzeug entlang der bestimmten Einparktrajektorie zu führen. In diesem Fall betätigt der Fahrer des Kraftfahrzeugs weiterhin das Gaspedal und die Bremse. Es kann auch vorgesehen sein, dass das Kraftfahrzeug mit Hilfe des Fahrerassistenzsystems vollautonom in die Parklücke eingeparkt wird. Hierbei greift das Fahrerassistenzsystem auch in einen Antriebsmotor und die Bremse des Kraftfahrzeugs ein.

Erfindungsgemäß ist es nun vorgesehen, dass die Einparktrajektorie in zwei aufeinanderfolgenden Teilschritten bestimmt wird. In einem ersten Teilschritt wird eine Hilfstrajektorie bestimmt, welche sich ebenfalls von dem Startpunkt zu dem Zielpunkt in der Parklücke erstreckt. Dabei setzt sich die Hilfstrajektorie aus mehreren aneinander angrenzenden bzw. benachbarten Abschnitten zusammen. Dabei ist es vorgesehen, dass die Hilfstrajektorie als die Abschnitte nur Kreisbögen und Linien aufweist. Mit anderen Worten wird also zunächst die Hilfstrajektorie bestimmt, die sich nur aus Kreisbögen und Linien bzw. Geraden zusammensetzt. Die jeweiligen Kreisbögen und Linien werden unter Berücksichtigung der Abmessungen der Parklücke bzw. der Objekte, welche die Parklücke begrenzen, bestimmt. Die Objekte bzw. Hindernisse, welche die Parklücke begrenzen, können beispielsweise geparkte Fahrzeuge oder Bordsteine sein. Zudem werden die Kreisbögen und Linien in Abhängigkeit von den äußeren Abmessungen des Kraftfahrzeugs und Eigenschaften der Lenkung des Kraftfahrzeugs, beispielsweise einem Wendekreis des Kraftfahrzeugs, bestimmt.

Wenn diese Hilfstrajektorie bestimmt ist, wird in einem zweiten Teilschritt die Einparktrajektorie auf Grundlage der Hilfstrajektorie bestimmt. Dabei wird für die jeweils aneinander angrenzenden Abschnitte der Hilfstrajektorie jeweils ein Übergangsbereich bestimmt. Dieser Übergangsbereich schließt also insbesondere jeweils einen Teilbereich der benachbarten Abschnitte ein. Für die jeweiligen Übergangsbereiche der benachbarten Abschnitte wird dann eine Klothoide bestimmt. Dabei ist unter dem Begriff Klothoide vorliegend auch ein Abschnitt bzw. ein Teilbereich einer Klothoide zu verstehen. Zum Bestimmen der Einparktrajektorie wird die Hilfstrajektorie verwendet, wobei die Hilfstrajektorie in den jeweiligen Übergangsbereichen durch die jeweiligen Klothoiden ersetzt wird. Somit kann zunächst die Hilfstrajektorie auf Grundlage der Geometrie des Kraftfahrzeugs, der Parklücke bzw. der Objekte in der Umgebung des Kraftfahrzeugs bestimmt werden. Aus dieser vereinfachten Hilfstrajektorie, die nur aus Kreisbögen und Linien besteht, kann dann durch das Einsetzen der jeweiligen Klothoiden in den Übergangsbereichen eine Einparktrajektorie bestimmt werden, die präzise mit dem Kraftfahrzeug nachgefahren werden kann. Dadurch, dass in den Übergangsbereichen die Klothoiden verwendet werden, können die Übergänge zwischen den Kreisbögen und den Linien und den damit verbundenen schlagartigen Änderungen des Lenkwinkels geglättet werden. Des Weiteren ergibt sich der Vorteil, dass bei der Bestimmung der jeweiligen Klothoiden in den Übergangsbereichen die Geometrien der Parklücke bzw. der Objekte in der Umgebung des Kraftfahrzeugs nicht mehr berücksichtigt werden müssen. Somit kann eine Einparktrajektorie innerhalb einer kurzen Rechenzeit bzw. mit einem geringen Rechenaufwand bestimmt werden, die aber dennoch präzise mit dem Kraftfahrzeug befahren werden kann.

Dabei werden die Hilfstrajektorie derart bestimmt, dass von dem Startpunkt zu dem Zielpunkt in der Parklücke Kreisbögen und Linien abwechselnd zueinander angeordnet sind. Auf Grundlage der Hilfstrajektorie kann eine Einparktrajektorie für unterschiedliche Typen von Parklücken bestimmt werden. Bei der Parklücke kann es sich beispielsweise um eine Längsparklücke handeln, in welche das Kraftfahrzeug rückwärts oder vorwärts eingeparkt wird. Bei der Parklücke kann es sich auch um eine Querparklücke oder Schrägparklücke handeln, in welche das Kraftfahrzeug vorwärts oder rückwärts eingeparkt wird. Im einfachsten Fall kann sich die Hilfstrajektorie beispielsweise nur aus einem Kreisbogen und aus einer Linie zusammensetzen. Dadurch, dass sich die Hilfstrajektorie aus einer abwechselnden Anordnung von Kreisbögen und Linien zusammensetzt, kann zwischen den benachbarten Abschnitten in dem Übergangsbereich die jeweilige Klothoide präzise und mit geringem Rechenaufwand bestimmt werden.

Bevorzugt wird in den jeweiligen Übergangsbereichen ein Kreisbogenabschnitt des Kreisbogens und/oder ein Linienabschnitt der Linie bestimmt, welche beim Bestimmen der Einparktrajektorie durch die jeweilige Klothoide ersetzt wird. Wenn die beiden benachbarten Abschnitte der Hilfstrajektorie ein Kreisbogen und eine Linie sind, wird von dem Kreisbogen ein Kreisbogenabschnitt und von der Linie ein Linienabschnitt bestimmt, welche dann den Übergangsbereich bestimmen. Beim Bestimmen der Einparktrajektorie werden dann der Kreisbogenabschnitt des Kreisbogens und der Linienabschnitt der Linie durch die Klothoide ersetzt. Durch das Einfügen der Klothoide kann die sprunghafte Änderung des Verlaufs der Hilfstrajektorie zwischen dem Kreisbogen und der Linie geglättet werden. Damit kann das Kraftfahrzeug insgesamt mit einer höheren Geschwindigkeit entlang der Einparktrajektorie bewegt werden.

Vorzugsweise wird zum Bestimmen der jeweiligen Klothoide ein Hilfskreisbogen für den Kreisbogen bestimmt, wobei ein Radius des Hilfskreisbogens kleiner als ein Radius des Kreisbogens ist und der Hilfskreisbogen den Kreisbogen in einem Fixpunkt berührt. Damit zwischen einem Kreisbogen und einer Linie eine Klothoide eingefügt werden kann, ist ein entsprechender Abstand zu bestimmen. Dieser Abstand wird dadurch geschaffen, dass der Radius des Kreisbogens quasi verkleinert wird. Hierzu wird der Hilfskreisbogen bestimmt, dessen Radius im Vergleich zu dem Radius des ursprünglich bestimmten Kreisbogens geringer ist. Der Unterschied zwischen dem Radius des Kreisbogens und dem Radius des Hilfskreisbogens beschreibt dann den Abstand. Dabei wird der Hilfskreis so bestimmt, dass dieser den Kreisbogen in einem Fixpunkt berührt. Der Kreisbogenabschnitt, der dann durch einen Teil der Klothoide ersetzt wird, erstreckt sich von dem Fixpunkt zu einem Berührpunkt, an welchem der benachbarte Abschnitt der Hilfstrajektorie angrenzt. Der Berührpunkt beschreibt also beispielsweise den Bereich, an den der Kreisbogen und die Linien aneinander angrenzen. Ausgehend von dem Hilfskreisbogen, der im Vergleich zu dem Kreisbogen einen geringeren Radius aufweist, kann dann mit geringem Rechenaufwand die Klothoide ausgehend von dem Fixpunkt bestimmt werden.

Weiterhin ist es vorteilhaft, wenn der Hilfskreisbogen derart bestimmt wird, dass der Fixpunkt in einer Mitte des Kreisbogens angeordnet ist, falls an beiden Seiten des Kreisbogens ein Abschnitt der Hilfstrajektorie angrenzt, oder dass der Fixpunkt dem Startpunkt der Hilfstrajektorie entspricht, falls der Kreisbogen den Startpunkt umfasst, oder dass der Fixpunkt dem Zielpunkt der Hilfstrajektorie entspricht, falls der Kreisbogen den Zielpunkt umfasst. Wenn sich der Kreisbogen, für den der Hilfskreisbogen bestimmt werden soll, am Anfang der Hilfstrajektorie befindet, umfasst der Kreisbogen den Startpunkt der Hilfstrajektorie. In diesem Fall kann dann der Fixpunkt auf den Startpunkt der Hilfstrajektorie gelegt werden und ausgehend von diesem die Klothoide bestimmt werden. Das Gleiche gilt für den Fall, wenn der Kreisbogen, für den der Hilfskreisbogen bestimmt werden soll, das Ende der Hilfstrajektorie bildet und somit den Endpunkt umfasst. Wenn der Kreisbogen, für den der Hilfskreisbogen bestimmt werden soll, beidseitig an eine Linie als Abschnitt der Hilfstrajektorie angrenzt, kann der Fixpunkt in einer Mitte des Kreisbogens definiert werden. Somit kann ausgehend von dem Fixpunkt entlang beider Richtungen die Klothoide definiert werden. Grundsätzlich kann es auch vorgesehen sein, dass der Fixpunkt außerhalb der Mitte des Kreisbogens definiert wird, falls an beiden Seiten des Kreisbogens eine Linie angrenzt. In diesem Fall wird dann der Kreisbogen asymmetrisch durch den Fixpunkt eingeteilt. Dadurch, dass der Fixpunkt mittig in dem Kreisbogen bestimmt wird, kann dieser auf einfache Weise und mit geringem Rechenaufwand bestimmt werden.

In einer weiteren Ausführungsform wird ein Unterschied zwischen dem Radius des Kreisbogens und dem Radius des Hilfskreisbogens anhand eines Winkels eines dem Kreisbogenabschnitt des Kreisbogens zugeordneten Kreissegments bestimmt, wobei sich der Winkel von dem Fixpunkt zu einem Berührpunkt des Kreisbogens mit dem benachbarten Abschnitt erstreckt. Dem Kreisbogenabschnitt der Hilfstrajektorie, welcher durch die Klothoide ersetzt werden soll, kann ein Kreissegment zugeordnet werden. Von diesem Kreissegment kann nun der Winkel bestimmt werden, der sich von dem Fixpunkt zu dem Berührpunkt, an dem der Kreisbogen beispielsweise die benachbarte Linie berührt, erstrecken. Wie bereits erläutert ist ein Abstand zu bestimmen, um zwischen dem Kreisbogen und der Linie die Klothoide zu definieren. Dieser Abstand wird durch den Unterschied des Radius des Kreisbogens und des Radius des Hilfskreisbogens definiert. Dieser kann nun in Abhängigkeit von dem Winkel des Kreissegments bestimmt werden. Insgesamt kann somit die Klothoide in Abhängigkeit von dem Kreisbogenabschnitt, der durch die Klothoide ersetzt werden soll, so bestimmt werden, dass die Klothoide eine möglichst geringe Krümmungsänderung aufweist.

Gemäß einer weiteren Ausgestaltung wird der Unterschied zwischen dem Radius des Kreisbogens und dem Radius des Hilfskreisbogens anhand einer Länge des Linienabstands der benachbarten Linie bestimmt. Bei der Bestimmung der Klothoide kann ebenfalls der Linienabschnitt der Linie, welcher durch die Klothoide ersetzt werden soll, berücksichtigt werden. Der Linienabschnitt, welcher durch die Klothoide ersetzt werden soll, kann zunächst definiert werden. In Abhängigkeit von der Länge dieses Linienabschnitts kann dann der Unterschied bzw. der Abstand zwischen dem Radius des Kreisbogens und dem Radius des Hilfskreisbogens bestimmt werden. Somit kann erreicht werden, dass eine Klothoide mit einer minimalen Krümmungsänderung auf einfache Weise bestimmt werden kann.

Grundsätzlich kann es auch vorgesehen sein, dass der Unterschied zwischen dem Radius des Kreisbogens und dem Radius des Hilfskreisbogens aufgrund jeweiliger Linienabschnitte der Linien, die auf beiden Seiten an den Kreisbogen angrenzen, bestimmt wird. Dabei kann es vorgesehen sein, dass der Fixpunkt des Kreisbogens nicht mittig in dem Kreisbogen definiert wird. In diesem Fall können auch unterschiedliche Linienabschnitte für die Linien, die an der einen Seite und an der anderen Seite an den Kreisbogen angrenzen, ergeben. Ferner kann in diesem Fall der Hilfskreisbogen so bestimmt werden, dass die Bedingungen für die jeweiligen Übergänge zu den angrenzenden Linien erfüllt werden.

Bevorzugt werden die jeweiligen Klothoiden in den Übergangsbereichen derart bestimmt, dass eine Krümmungsänderung der Klothoide minimal ist. Dies ermöglicht es, dass das Kraftfahrzeug während des Einparkvorgangs der Einparktrajektorie mit der höchstmöglichen Geschwindigkeit folgen kann.

Grundsätzlich kann es auch vorgesehen sein, dass das Kraftfahrzeug in mehreren aufeinanderfolgenden Zügen in die Parklücke eingeparkt wird. Dabei erfolgt zwischen den Zügen ein Fahrtrichtungswechsel des Kraftfahrzeugs. Beispielsweise kann das Kraftfahrzeug zunächst in einem ersten Zug rückwärts, in einem zweiten Zug vorwärts und anschließend in einem dritten Zug wieder rückwärts bewegt werden. Dabei ist es insbesondere vorgesehen, dass für jeden der Züge eine Einparktrajektorie bestimmt wird, wobei zum Bestimmen der Einparktrajektorie zunächst die Hilfstrajektorie bestimmt wird.

Ein erfindungsgemäßes Fahrerassistenzsystem ist zum Durchführen eines erfindungsgemäßen Verfahrens ausgelegt. Das Fahrerassistenzsystem kann beispielsweise eine Mehrzahl von Sensoren umfassen, mit denen die Parklücke vermessen werden kann. Darüber hinaus kann das Fahrerassistenzsystem eine Steuereinrichtung umfassen, die beispielsweise durch ein elektronisches Steuergerät des Kraftfahrzeugs gebildet sein kann. Mit Hilfe der Steuereinrichtung kann dann zunächst die Hilfstrajektorie und ausgehend von der Hilfstrajektorie die Einparktrajektorie bestimmt werden. Bevorzugt ist das Fahrerassistenzsystem ferner dazu ausgelegt, das Kraftfahrzeug entlang der bestimmten Einparktrajektorie zumindest semi-autonom zu manövrieren.

Ein erfindungsgemäßes Kraftfahrzeug umfasst ein erfindungsgemäßes Fahrerassistenzsystem. Das Kraftfahrzeug ist insbesondere als Personenkraftwagen ausgebildet.

Die mit Bezug auf das erfindungsgemäße Verfahren vorgestellten bevorzugten Ausführungsformen und deren Vorteile gelten entsprechend für das erfindungsgemäße Fahrerassistenzsystem sowie für das erfindungsgemäße Kraftfahrzeug.

Weitere Merkmale der Erfindung ergeben sich aus den Ansprüchen, den Figuren und der Figurenbeschreibung.

Die Erfindung wird nun anhand von bevorzugten Ausführungsbeispielen sowie unter Bezugnahme auf die beigefügten Zeichnungen näher erläutert.

Dabei zeigen:

Fig. 1   ein Kraftfahrzeug gemäß einer Ausführungsform der vorliegenden Erfindung, welches ein Fahrerassistenzsystem aufweist;

Fig. 2   eine ausschnittsweise Darstellung einer Hilfstrajektorie, welche zum Bestimmen einer Einparktrajektorie bestimmt wird, wobei die Hilfstrajektorie eine Linie und einen Kreisbogen umfasst;

Fig. 3   einen Hilfskreisbogen sowie eine Klothoide, welche den Kreisbogen und die Linie in einem Übergangsbereich teilweise ersetzt;

Fig. 4   eine Hilfstrajektorie, welche sich aus Kreisbögen und Linien zusammensetzt sowie Hilfskreisbögen für die Kreisbögen;

Fig. 5   ein Hilfskreisbogen, welcher in Abhängigkeit von einem Linienabschnitt der Linie und einem Kreisbogenabschnitt des Kreissegments bestimmt ist;

Fig. 6   ein Hilfskreisbogen gemäß einer weiteren Ausführungsform; und

Fig. 7   die Einparktrajektorie, welche anhand der Hilfstrajektorie bestimmt wurde.

In den Figuren werden gleiche und funktionsgleiche Elemente mit den gleichen Bezugzeichen versehen.

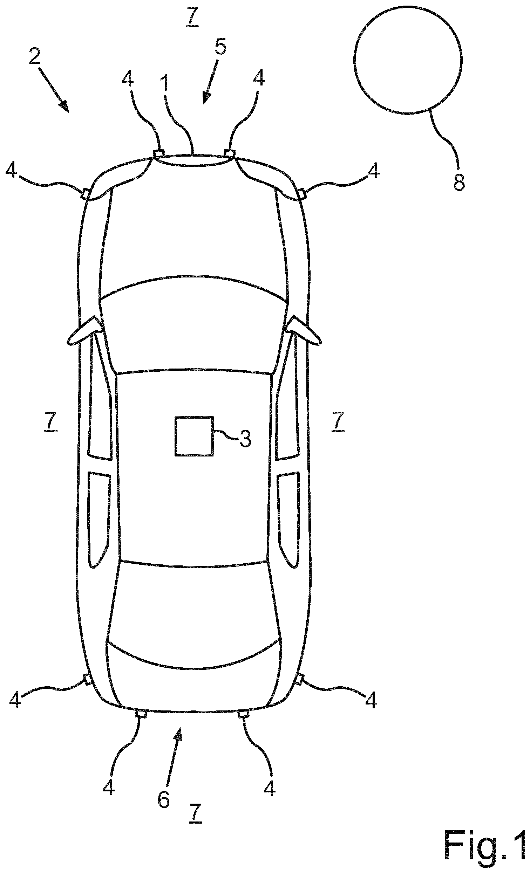

Fig. 1 zeigt ein Kraftfahrzeug 1 gemäß einer Ausführungsform der vorliegenden Erfindung in einer Draufsicht. Das Kraftfahrzeug 1 ist vorliegend als Personenkraftwagen ausgebildet. Das Kraftfahrzeug 1 umfasst ein Fahrerassistenzsystem 2, welches dazu dient, einen Fahrer beim Führen des Kraftfahrzeugs 1 zu unterstützen. Insbesondere dient das Fahrerassistenzsystem 2 dazu, den Fahrer beim Einparken des Kraftfahrzeugs 1 in eine Parklücke zu unterstützen.

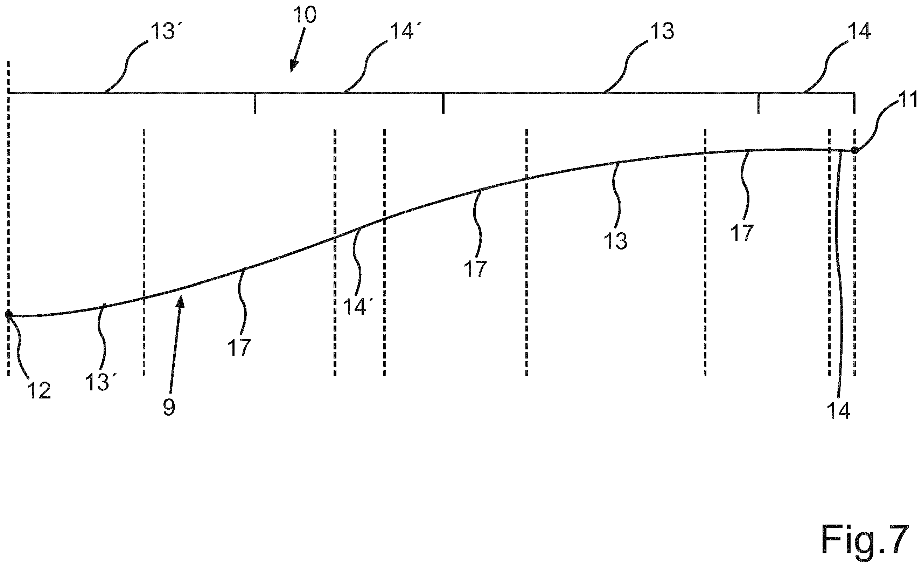

Das Fahrerassistenzsystem 2 umfasst eine Mehrzahl von Sensoren 4, mit denen Objekte 8 in einer Umgebung 7 des Kraftfahrzeugs 1 erfasst werden können. Die Sensoren 4 können beispielsweise als Ultraschallsensoren ausgebildet sein. Vorliegend umfasst das Fahrerassistenzsystem 2 acht Sensoren 4, wobei vier Sensoren 4 in einem Frontbereich 5 und vier Sensoren 4 in einem Heckbereich 6 des Kraftfahrzeugs 1 angeordnet sind. Die Sensoren 4 sind ferner mit einer Steuereinrichtung 3 des Fahrerassistenzsystems 2 zur Datenübertragung verbunden. Wenn mit den Sensoren 4 Objekte 8 erfasst werden, welche die Parklücke begrenzen, können mit Hilfe der Steuereinrichtung 3 die Abmessungen der Parklücke bestimmt werden. Mit der Steuereinrichtung 3 kann ferner eine Einparktrajektorie 9 (siehe Fig. 7) bestimmt werden, entlang welcher das Kraftfahrzeug 1 in die Parklücke manövriert werden kann.

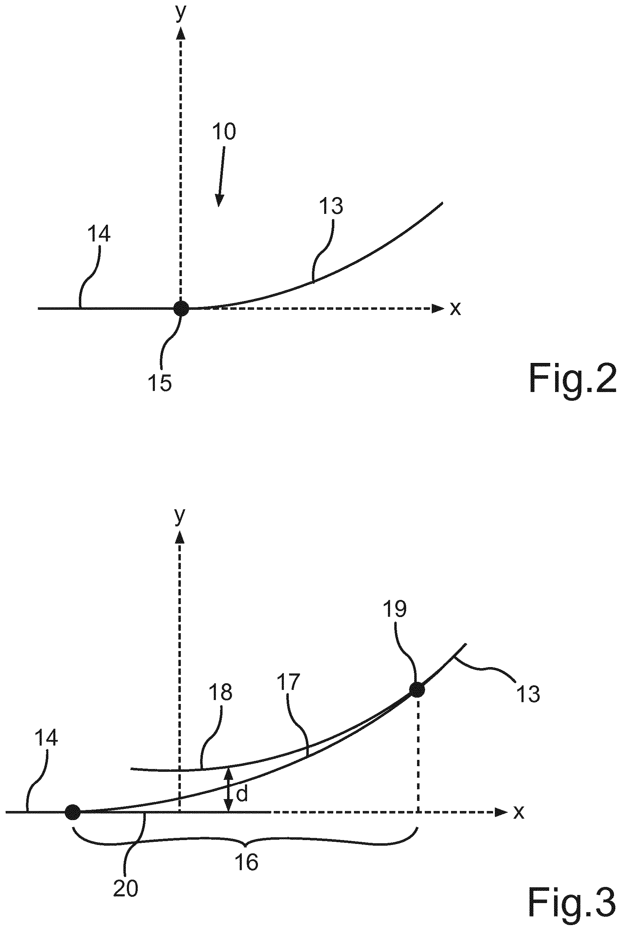

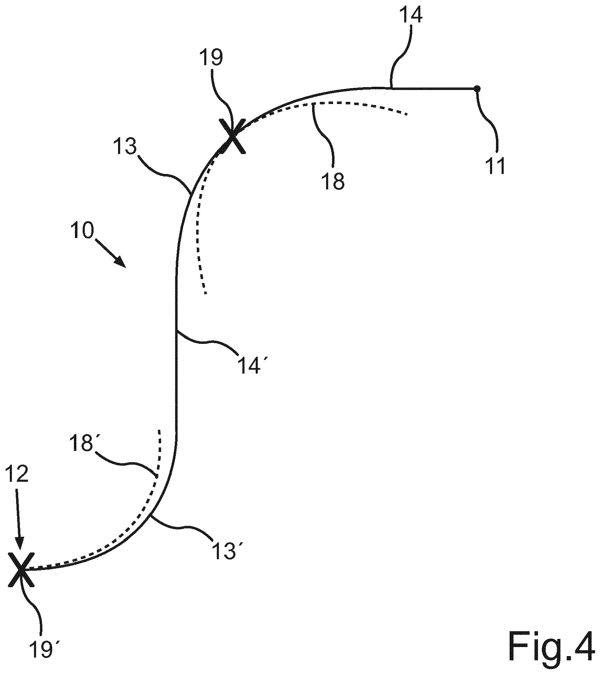

Die Bestimmung der Einparktrajektorie 9 mit Hilfe der Steuereinrichtung 3 erfolgt vorliegend in zwei aufeinanderfolgenden Teilschritten. In einem ersten Teilschritt wird zunächst eine Hilfstrajektorie 10 (siehe Fig. 4) bestimmt, welche sich von einem Startpunkt 11 zu einem Zielpunkt 12 in der Parklücke erstreckt. Dabei ist es vorgesehen, dass sich die Hilfstrajektorie 10 aus mehreren Abschnitten zusammensetzt. Als die Abschnitte umfasst die Hilfstrajektorie 10 nur Kreisbögen 13, 13' und Linien 14, 14'. Die jeweiligen Kreisbögen 13, 13' und die Linien 14, 14' werden anhand der Abmessungen der Parklücke und der äußeren Abmessungen des Kraftfahrzeugs 1 bestimmt. Hierzu zeigt Fig. 2 eine ausschnittsweise Darstellung der Hilfstrajektorie 10, von der vorliegend ein Kreisbogen 13 und eine Linie 14 dargestellt sind. Der Kreisbogen 13 und die Line 14 berühren sich in einem Berührpunkt 15.

In einem zweiten Teilschritt der Bestimmung der Einparktrajektorie 9 werden für benachbarte Abschnitte der Hilfstrajektorie 10 Übergangsbereiche 16 definiert. Für die jeweiligen Übergangsbereiche 16 werden dann Klothoiden 17 bestimmt. Dies ist schematisch anhand von Fig. 3 verdeutlicht. Dort ist der Kreisbogen 13 sowie die Linie 14 von Fig. 2 gezeigt, welche in dem Übergangsbereich 16 durch die Klothoide 17 ersetzt sind. Der Übergangsbereich 16 umfasst einen Linienabschnitt 20 der Linie 14, welcher teilweise durch die Klothoide 17 ersetzt wird. Des Weiteren wird ein hier nicht dargestellter Kreisbogenabschnitt des Kreisbogens 13 durch die Klothoide 17 ersetzt. Zum Bestimmen der Klothoide 17 wird zunächst ein Hilfskreisbogen 18 bestimmt. Dieser Hilfskreisbogen 18 weist dabei einen Radius R auf, welcher kleiner als ein Radius des Kreisbogens 13 ist. Dabei ist in Fig. 3 ein Unterschied d bzw. ein Abstand zwischen dem Radius des Kreisbogens 13 und dem Radius R des Hilfskreisbogens 18 dargestellt. Hierbei ist der Hilfskreisbogen 18 so bestimmt, dass er den Kreisbogen 13 in einem Fixpunkt 19 berührt.

Die Bestimmung des jeweiligen Fixpunktes 19, 19' für die Kreissegmente 13, 13' wird nachfolgend anhand von Fig. 4 erläutert, welche die Hilfstrajektorie 10 zeigt, welche sich von dem Startpunkt 11 zu dem Zielpunkt 12 erstreckt. Ausgehend von dem Startpunkt 11 weist die Hilfstrajektorie 10 eine erste Linie 14 auf, die sich an den Startpunkt 11 anschließt. Ferner weist die Hilfstrajektorie 10 einen ersten Kreisbogen 13 auf, der sich an die erste Linie 14 anschließt. Des Weiteren umfasst die Hilfstrajektorie 10 eine zweite Linie 14', die sich an den ersten Kreisbogen 13 anschließt. An die zweite Linie 14' schließt sich ein zweiter Kreisbogen 13' an, welcher den Zielpunkt 12 beinhaltet. Der erste Kreisbogen 13 weist auf beiden Seiten einen Übergang zu einer Linie 14, 14' auf. In diesem Fall wird der Fixpunkt 19 so definiert, dass dieser mittig in dem Kreisbogen 13 liegt. In Fig. 4 ist ferner der erste Hilfskreisbogen 18 für den ersten Kreisbogen 13 dargestellt, der den Kreisbogen 13 in dem Fixpunkt 19 berührt. Für den zweiten Kreisbogen 13 wird der zweite Fixpunkt 19' in dem Zielpunkt 12 bestimmt, da das zweite Kreissegment 13' bzw. die Hilfstrajektorie 10 hier endet. In diesem Fall wird die Klothoide 19 nur in Richtung der zweiten Linie 14' benötigt. Auch hier ist der korrespondierende Hilfskreisbogen 18' zu dem zweiten Kreisbogen 13' dargestellt.

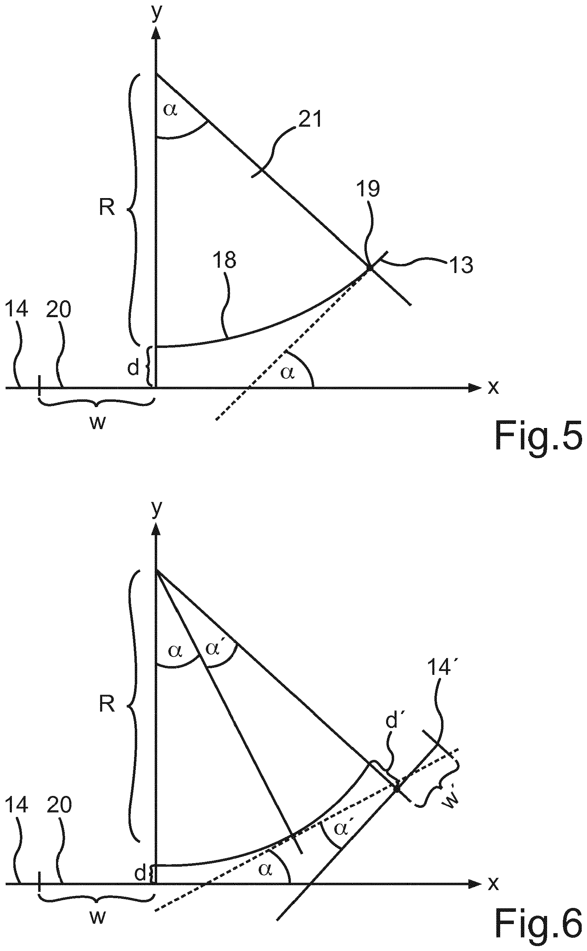

Fig. 5 zeigt eine schematische Darstellung des Hilfskreisbogens 18, welcher in Abhängigkeit von dem Linienabschnitt 20 und dem Kreisbogenabschnitt, welche durch die Klothoide 17 ersetzt werden, bestimmt ist. Hierzu wird ein Kreissegment 21 bestimmt, welches dem Kreisbogenabschnitt des Kreisbogens 13 zugeordnet wird, welcher durch die Klothoide 17 ersetzt werden soll. Dieses Kreissegment 21 schließt einen Winkel $\alpha$ ein, der sich von dem Fixpunkt 19 zu dem Berührpunkt 15 erstreckt. Vorliegend soll nun der Unterschied d zwischen dem Radius des Kreisbogens 13 und dem Radius R des Hilfskreisbogens 18 bestimmt werden. Dazu kann zunächst die y-Komponente $y_{kr}$ des Kreisbogens 13 bestimmt werden. Diese ergibt sich aus der Kreisgleichung zu:

$$y_{kr} = (1 - \cos(\alpha)) * R.$$

Die y-Komponente $y_{kr}$ des Kreisbogens 13 kann dadurch angenähert werden, dass die Cosinus-Funktion durch eine Taylor-Reihe angenähert wird:

$$y_{kr} = \left(1 - (1 - \alpha^2/2)\right) * R = \alpha^2/2.$$

Die y-Komponente $y_{kl}$ der Klothoide 17 kann durch folgende Formel angenähert werden:

$$y_{kl} = L * \alpha/3.$$

Dabei beschreibt L die Länge der Klothoide, welche L = 2 * $R$ * $\alpha$ entspricht. Damit kann die y-Komponente $y_{kl}$ der Klothoide 17 wie folgt beschrieben werden:

$$y_{kl} = 2/3 * \alpha^2 * R.$$

Der Unterschied d ergibt sich aus dem Unterschied der y-Komponente $y_{kl}$ der Klothoide 17 und der y-Komponente $y_{kr}$ des Kreissegments 13:

$$d = y_{kl} - y_{kr} = 2/3 * \alpha^2 * R - \left(1 - cos - (\alpha)\right) * R.$$

Hieraus ergibt sich:

$$d = 1/6 * a^2 * R$$

und

$$d/R = 1/6 * L * \alpha^2.$$

In gleicher Weise kann der Unterschied d in Abhängigkeit von einer Länge w des Linienabschnitts 20 bestimmt werden, welcher durch die Klothoide 17 ersetzt werden soll. Hierzu kann zunächst die x-Komponente $x_{kr}$ des Kreisbogens 13 bestimmt werden:

$$x_{kr} = \sin(\alpha) * R \approx \alpha * R.$$

Ferner kann die x-Komponente $x_{kl}$ der Klothoide 17 bestimmt werden:

$$x_{kl} = \text{L} = 2 * R * a.$$

Die Länge w des Linienabschnitts 20 ergibt sich aus der Differenz der x-Komponente $x_{kl}$ der Klothoide 17 und der x-Komponente $x_{kr}$ des Kreisbogens 13:

$$w = x_{kl} - x_{kr} = 2 * R * a - R * a = R * a.$$

$$\text{Mit } \alpha^2 = w^2/R^2 \text{ in } d = 1/6 * \alpha^2 * R$$

ergibt sich:

$$d = 1/6 * w^2/R.$$

Fig. 6 zeigt ferner ein Beispiel, bei welchem der Fixpunkt 19 nicht mittig in dem Kreisbogen 13 definiert wurde. Hierbei kann der Abstand d für die Linie 14, die den Kreisbogen 13 auf der ersten Seite begrenzt und die zweite Linie 14', welche den Kreisbogen 13 auf der gegenüberliegenden Seite begrenzt, und dem Unterschied d' auf dieser Seite ein Verhältnis bestimmt werden:

$$d/d' = 1/6 * w^2/R/(1/6 * w'^2/R).$$

Daraus folgt:

$$w/w' = \sqrt{d/d'}.$$

Somit kann der Unterschied d auf Grundlage des Winkels $\alpha$ des Kreissegments 21, der Länge w des Linienabschnitts 20 und von dem weiteren Unterschied d' bestimmt werden. Somit ergeben sich drei Kriterien für die Bestimmung des Unterschieds d, wobei das Minimum für d gewählt wird, das anhand der drei Kriterien bestimmt wurde.

Fig. 7 zeigt die Einparktrajektorie 9, die auf Grundlage der Hilfstrajektorie 10 bestimmt wurde, wobei in den Übergangsbereichen 16 die Hilfstrajektorie 10 durch die jeweilige Klothoide 17 ersetzt wurde. Über der Einparktrajektorie 9 sind die jeweiligen Abschnitte bzw. Kreissegmente 13, 13' und Linien 14, 14' der Hilfstrajektorie 10 dargestellt. Entlang der Einparktrajektorie 9 kann das Kraftfahrzeug 1 beispielsweise rückwärts in eine Längsparklücke manövriert werden.

**Patentansprüche**

1. Verfahren zum Manövrieren eines Kraftfahrzeugs (1) in eine Parklücke, bei welchem von einem Startpunkt (11) zu einem Zielpunkt (12) in der Parklücke eine Einparktrajektorie (9) bestimmt wird, wobei die Einparktrajektorie (9) aus Kreisbögen (13, 13'), Linien (14, 14') und Klothoiden (17) zusammengesetzt ist, und das Kraftfahrzeug (1) entlang der bestimmten Einparktrajektorie (9) in die Parklücke manövriert wird,
   wobei eine Hilfstrajektorie (10) mit mehreren Abschnitten von dem Startpunkt (11) zum dem Zielpunkt (12) bestimmt wird, wobei die Hilfstrajektorie (10) als die Abschnitte Kreisbögen (13, 13') und Linien (14, 14') aufweist, für benachbarte Abschnitte ein jeweiliger Übergangsbereich (16) definiert wird und für die jeweiligen Übergangsbereiche (16) eine Klothoide (17) bestimmt wird, wobei die Einparktrajektorie (9) aus der Hilfstrajektorie (10), bei welcher die jeweiligen Übergangsbereiche (16) durch die Klothoiden (17) ersetzt sind, bestimmt wird,
   **dadurch gekennzeichnet, dass**
   die Abschnitte der Hilfstrajektorie (10) derart bestimmt werden, die Kreisbögen (13, 13') und die Linien (14, 14') abwechselnd zueinander angeordnet sind.

2. Verfahren nach Anspruch 1,
   **dadurch gekennzeichnet, dass**
   zum Definieren der jeweiligen Übergangsbereiche (16) ein Kreisbogenabschnitt des Kreisbogens (13, 13') und/oder ein Linienabschnitt (20) der Linie (14, 14') bestimmt wird, welche beim Bestimmen der Einparktrajektorie (9) durch die jeweilige Klothoide (17) ersetzt wird.

3. Verfahren nach einem der vorhergehenden Ansprüche,
   **dadurch gekennzeichnet, dass**
   zum Bestimmen jeweiligen Klothoide (17) ein Hilfskreisbogen (18, 18') für den Kreisbogen (13, 13') bestimmt wird, wobei ein Radius (R) des Hilfsreisbogens (18, 18') kleiner als ein Radius des Kreisbogens (13, 13') ist und der Hilfskreisbogen (18, 18') den Kreisbogen (13, 13') in einem Fixpunkt (19, 19') berührt.

4. Verfahren nach Anspruch 3,
   **dadurch gekennzeichnet, dass**
   der Hilfskreisbogen (18, 18') derart bestimmt wird, dass der Fixpunkt (19, 19') in einer Mitte des Kreisbogens (13, 13') angeordnet ist, falls an beide Seite des Kreisbogens (13, 13') ein Abschnitt der Hilfstrajektorie (10) angrenzt, oder dass der Fixpunkt (19, 19') dem Startpunkt (11) der Hilfstrajektorie (10) entspricht, falls der Kreisbogen (13, 13') den Startpunkt (11) umfasst, oder dass der Fixpunkt (19, 19') dem Zielpunkt (12) der Hilfstrajektorie (10) entspricht, falls der Kreisbogen (13, 13') den Zielpunkt (12) umfasst.

5. Verfahren nach einem der Ansprüche 3 oder 4,
   **dadurch gekennzeichnet, dass**
   ein Unterschied (d) zwischen dem Radius des Kreisbogens (13, 13') und dem Radius (R) des Hilfskreisbogens (18, 18') anhand eines Winkels ($\alpha$) eines dem Kreisbogenabschnitt des Kreisbogens (13, 13') zugeordneten Kreissegments (21) bestimmt wird, wobei sich der Winkel ($\alpha$) von dem Fixpunkt (19, 19') zu einem Berührpunkt (15) des Kreisbogens (13, 13') mit dem benachbarten Abschnitt erstreckt.

**6.** Verfahren nach einem der Ansprüche 3 bis 5,
**dadurch gekennzeichnet, dass**
der Unterschied (d) zwischen dem Radius des Kreisbogens (13, 13') und dem Radius (R) des Hilfskreisbogens (18, 18') anhand einer Länge (w) des Linienabschnitts (20) der benachbarten Linie (14, 14') bestimmt wird.

**7.** Verfahren nach einem der vorhergehenden Ansprüche,
**dadurch gekennzeichnet, dass**
die jeweilige Klothoide (17) in den Übergangsbereichen (16) derart bestimmt wird, dass eine Krümmungsänderung der Klothoide (17) minimal ist.

**8.** Fahrerassistenzsystem (2) für ein Kraftfahrzeug (1), welches zum Durchführen eines Verfahrens nach einem der vorhergehenden Ansprüche ausgelegt ist.

**9.** Fahrerassistenzsystem (2) nach Anspruch 8,
**dadurch gekennzeichnet, dass**
das Fahrerassistenzsystem (2) dazu ausgelegt ist, das Kraftfahrzeug (1) zumindest semi-autonom entlang der Einparktrajektorie (9) zu manövrieren.

**10.** Kraftfahrzeug (1) mit einem Fahrerassistenzsystem (2) nach einem der Ansprüche 8 oder 9.

**Claims**

**1.** Method for manoeuvring a motor vehicle (1) into a parking space, in which a parking trajectory (9) from a starting point (11) to a destination point (12) in the parking space is determined, wherein the parking trajectory (9) is composed of circular arcs (13, 13'), straight lines (14, 14') and clothoids (17), and the motor vehicle (1) is manoeuvred along the determined parking trajectory (9) into the parking space,
wherein an auxiliary trajectory (10) with a plurality of sections is determined from the starting point (11) to the destination point (12), wherein the auxiliary trajectory (10) comprises circular arcs (13, 13') and straight lines (14, 14') as the sections, a respective transition region (16) is defined for neighbouring sections, and a clothoid (17) is determined for the respective transition regions (16), wherein the parking trajectory (9) is determined from the auxiliary trajectory (10) in which the respective transition regions (16) are replaced by the clothoids (17),
**characterized in that**
the sections of the auxiliary trajectory (10) are determined in such a way that the circular arcs (13, 13') and the straight lines (14, 14') are arranged in alternation with one another.

**2.** Method according to Claim 1,
**characterized in that**
a circular-arc section of the circular arc (13, 13') and/or a straight-line section (20) of the straight line (14, 14') is determined for defining the respective transition regions (16), which is replaced by the respective clothoid (17) when determining the parking trajectory (9).

**3.** Method according to either of the preceding claims,
**characterized in that**
to determine respective clothoids (17) an auxiliary circular arc (18, 18') is determined for the circular arc (13, 13'), wherein a radius (R) of the auxiliary circular arc (18, 18') is smaller than a radius of the circular arc (13, 13'), and the auxiliary circular arc (18, 18') touches the circular arc (13, 13') at a fixed point (19, 19').

**4.** Method according to Claim 3,
**characterized in that**
the auxiliary circular arc (18, 18') is determined in such a way that the fixed point (19, 19') is arranged at a centre of the circular arc (13, 13') if a section of the auxiliary trajectory (10) is adjacent at both ends of the circular arc (13, 13'), or that the fixed point (19, 19') corresponds to the starting point (11) of the auxiliary trajectory (10) if the circular arc (13, 13') includes the starting point (11), or that the fixed point (19, 19') corresponds to the destination point (12) of the auxiliary trajectory (10) if the circular arc (13, 13') includes the destination point (12).

5. Method according to either of Claims 3 and 4,
   **characterized in that**
   a difference (d) is determined between the radius of the circular arc (13, 13') and the radius (R) of the auxiliary circular arc (18, 18') on the basis of an angle (a) of a circular segment (21) assigned to the circular-arc section of the circular arc (13, 13'), wherein the angle (a) extends from the fixed point (19, 19') to a contact point (15) of the circular arc (13, 13') with the neighbouring section.

6. Method according to one of Claims 3 to 5,
   **characterized in that**
   the difference (d) between the radius of the circular arc (13, 13') and the radius (R) of the auxiliary circular arc (18, 18') is determined with reference to a length (w) of the straight-line section (20) of the neighbouring straight line (14, 14').

7. Method according to one of the preceding claims,
   **characterized in that**
   the respective clothoid (17) in the transition regions (16) is determined such that a change in the curvature of the clothoid (17) is minimum.

8. Driver assistance system (2) for a motor vehicle (1), that is designed for carrying out a method according to one of the preceding claims.

9. Driver assistance system (2) according to Claim 8,
   **characterized in that**
   the driver assistance system (2) is designed to manoeuvre the motor vehicle (1) at least semi-autonomously along the parking trajectory (9).

10. Motor vehicle (1) with a driver assistance system (2) according to either of Claims 8 and 9.

## Revendications

1. Procédé de manœuvre d'un véhicule automobile (1) dans une place de stationnement libre, procédé dans lequel une trajectoire de stationnement (9) est déterminée d'un point de départ (11) à un point de destination (12) dans la place de stationnement libre, la trajectoire de stationnement (9) étant composée d'arcs de cercle (13, 13'), de lignes (14, 14') et de clothoïdes (17), et le véhicule automobile (1) étant manœuvré dans la place de stationnement libre le long de la trajectoire de stationnement déterminée (9),
   une trajectoire auxiliaire (10) pourvue de plusieurs portions étant déterminée du point de départ (11) au point de destination (12), la trajectoire auxiliaire (10) comportant comme portions des arcs de cercle (13, 13') et des lignes (14, 14'), une zone de transition respective (16) étant définie pour des portions adjacentes et une clothoïde (17) étant déterminée pour les zones de transition respectives (16), la trajectoire de stationnement (9) étant déterminée à partir de la trajectoire auxiliaire (10) dans laquelle les zones de transition respectives (16) sont remplacées par les clothoïdes (17),
   **caractérisé en ce que**
   les portions de la trajectoire auxiliaire (10) sont déterminées de telle sorte que les arcs de cercle (13, 13') et les lignes (14, 14') soient disposés en alternance les uns avec les autres.

2. Procédé selon la revendication 1,
   **caractérisé en ce que**
   pour définir les zones de transition respectives (16), une portion de l'arc de cercle (13, 13') et/ou une portion (20) de la ligne (14, 14') sont déterminées qui sont remplacées par la clothoïde respective (17) lors de la détermination de la trajectoire de stationnement (9) .

3. Procédé selon l'une des revendications précédentes,
   **caractérisé en ce que**
   pour déterminer la clothoïde respective (17), un arc de cercle auxiliaire (18, 18') est déterminé pour l'arc de cercle (13, 13'), un rayon (R) de l'arc de cercle auxiliaire (18, 18') étant plus petit qu'un rayon de l'arc de cercle (13, 13') et l'arc de cercle auxiliaire (18, 18') étant en contact avec l'arc de cercle (13, 13') en un point fixe (19, 19').

4. Procédé selon la revendication 3,
**caractérisé en ce que**
l'arc de cercle auxiliaire (18, 18') est déterminé de telle sorte que le point fixe (19, 19') soit disposé au centre de l'arc de cercle (13, 13') si une portion de la trajectoire auxiliaire (10) est adjacente aux deux côtés de l'arc de cercle (13, 13'), ou **en ce que** le point fixe (19, 19') correspond au point de départ (11) de la trajectoire auxiliaire (10) si l'arc de cercle (13, 13') inclut le point de départ (11), ou **en ce que** le point fixe (19, 19') correspond au point de destination (12) de la trajectoire auxiliaire (10) si l'arc de cercle (13, 13') inclut le point de destination (12).

5. Procédé selon l'une des revendications 3 et 4,
**caractérisé en ce que**
la différence (d) entre le rayon de l'arc de cercle (13, 13') et le rayon (R) de l'arc de cercle auxiliaire (18, 18') est déterminée sur la base d'un angle ($\alpha$) d'un segment de cercle (21) associé à la portion de l'arc de cercle (13, 13'), l'angle ($\alpha$) s'étendant du point fixe (19, 19') à un point de contact (15) de l'arc de cercle (13, 13') avec la portion adjacente.

6. Procédé selon l'une des revendications 3 à 5,
**caractérisé en ce que**
la différence (d) entre le rayon de l'arc de cercle (13, 13') et le rayon (R) de l'arc de cercle auxiliaire (18, 18') est déterminée sur la base de la longueur (w) de la portion (20) de la ligne adjacente (14, 14').

7. Procédé selon l'une des revendications précédentes,
**caractérisé en ce que**
la clothoïde respective (17) dans les zones de transition (16) est déterminée de telle sorte que la variation de courbure de la clothoïde (17) soit minimale.

8. Système d'assistance à la conduite (2) destiné à un véhicule automobile (1), lequel système est conçu pour mettre en œuvre un procédé selon l'une des revendications précédentes.

9. Système d'assistance à la conduite (2) selon la revendication 8,
**caractérisé en ce que**
le système d'assistance à la conduite (2) est conçu pour manœuvrer le véhicule automobile (1) au moins de manière semi-autonome le long de la trajectoire de stationnement (9) .

10. Véhicule automobile (1) comprenant un système d'assistance à la conduite (2) selon l'une des revendications 8 et 9.

Fig.1

Fig.2

Fig.3

Fig.4

Fig.5

Fig.6

Fig.7

EP 3 464 027 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102005062084 A1
- EP 2493746 B1
- DE 102009027289 A1